# EUROPEAN PATENT APPLICATION

(11) **EP 3 683 105 A1**
(43) Date of publication of application: **22.07.2020**
(21) Application number: 18855447.1
(22) Date of filing: 05.09.2018
(51) Int. Cl.: B60S 5/06

(54) **MANUAL BATTERY CHANGING SYSTEM FOR ELECTRIC VEHICLE**

(30) Priority: 12.09.2017 CN 201721165820 U
(71) Applicant: Nio Co., Ltd., Shanghai 201804 (CN)
(72) Inventor: BENGTSSON, Jan, Shanghai 201804 (CN); LI, Nan, Shanghai 201804 (CN); TIAN, Xiaotao, Shanghai 201804 (CN); DING, Xikun, Shanghai 201804 (CN); MA, Yongyue, Shanghai 201804 (CN)
(74) Representative: Vossius & Partner Patentanwälte Rechtsanwälte mbB
(86) International application number: PCT/CN2018/104191
(87) International publication number: WO 2019/052387

(57) **Abstract**

Provided is a manual battery swap system for an electric vehicle. The system comprises: a vehicle hoister (1), an auxiliary bolt disassembly device (2), a battery pack management device (3) and a transfer trolley (4), wherein the vehicle hoister (1) is used to hoist a vehicle; the auxiliary bolt disassembly device (2) is used to tighten or loosen a bolt; the battery pack management device (3) is provided on one side of the vehicle hoister (1) for receiving a used battery pack and supplying a fresh battery pack; and the transfer trolley (4) is used to transport, exchange and lift a battery pack.

## Description

### Technical Field

The invention relates to the technical field of battery swapping for electric vehicles, and in particular to a manual battery swap system for an electric vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, but the range provided by a traction battery per charge is far from being comparable to that of a traditional means of transport. Therefore, how to replenish the traction battery quickly and conveniently with electric energy becomes an important factor in the use and promotion of the electric vehicles, but in the current battery charging technology, charging cannot be completed in a few minutes just like refueling. Hence, battery swapping becomes a common way to replenish the electric vehicles with electric energy.

An AGV (referring to a carrying trolley that is equipped with an electromagnetic or optical automatic guide device, can travel along a specified guide path, has safety protection and various transfer functions, does not require a driver in industrial applications, and uses a rechargeable battery as its power source) trolley manual battery swap system of the existing production lines for electric vehicles is composed of an AGV walking trolley and a suspension-type vehicle-lifting crane. The AGV trolley comprises a walking system, a scissor lift platform and a manual floating disassembly device. Both an AGV walking trolley and a vehicle-lifting crane in the system have large volumes, and guide rails and safety protection systems need to be constructed and built indoors. As a result, there are disadvantages of excessively high costs, large space, high field requirements, restricted distribution, and the like.

### Summary of the Invention

The technical problem to be solved by the invention is to provide a manual battery swap system for an electric vehicle, the manual battery swap system being composed of various parts that are small in size, light in weight, easy to install and convenient to transport, and the whole system is simple in structure, safe and reliable, and easy to operate and implement, and can be widely promoted in various places.

In order to solve the above technical problem, the invention provides a manual battery swap system for an electric vehicle, the system comprising: a vehicle hoister, an auxiliary bolt disassembly device, a transfer trolley and a battery pack management device, wherein
the vehicle hoister is used to hoist a vehicle;
the auxiliary bolt disassembly device is used to tighten or loosen a bolt;
the battery pack management device is provided on one side of the vehicle hoister for receiving a used battery pack and supplying a fresh battery pack; and
the transfer trolley is used to transport, exchange and lift a battery pack.

Further, the vehicle hoister comprises a main body frame structure, a support structure, and a hoisting structure;
wherein the hoisting structure is provided on a main body frame and is connected to the support structure;
the support structure is used to support vehicle lift points; and
the hoisting structure is used to lift a vehicle to a first preset height by means of hoisting the support structure, the first preset height being the height of the vehicle, when in place for battery swapping, from the ground.

Further, the hoisting structure comprises a first lifting arm and a second lifting arm, the support structure comprise a first support structure and a second support structure, the first support structure is provided on the first lifting arm, and the second support structure is provided on the second lifting arm.

Further, the auxiliary bolt disassembly device comprises one or more floor type manipulators, and the floor type manipulator comprises a torque gun for tightening or loosening a bolt.

Further, the auxiliary bolt disassembly device comprises two floor type manipulators, which are respectively provided on bottom faces corresponding to two ends of one diagonal of the vehicle.

Further, the battery pack management device comprises:
a battery pack receiving and outputting unit for receiving a used battery pack conveyed by the transfer trolley and outputting a fresh battery pack to the transfer trolley;
a battery pack charging unit for charging a used battery pack; and
a battery pack storage unit for storing a fresh battery pack and a used battery pack.

Further, the battery pack management device further comprises: a control unit for controlling the battery pack receiving and outputting unit to receive or output a battery pack, controlling the battery pack charging unit to charge a battery pack, and controlling the battery pack storage unit to store a battery pack.

Further, the battery pack management device further comprises a battery exchange port, through which the used battery pack is received and the fresh battery pack is output.

The invention has obvious advantages and beneficial effects as compared with the prior art. By means of the above technical solutions, a manual battery swap system for an electric vehicle of the invention can achieve considerable technical progress and practicality, has a wide range of industrial utility value, and has at least the following advantages:
the various parts of the manual battery swap system of the invention are independently arranged and can be used separately, the components are small in size, light in weight, easy to install and easy to transport, so the whole system is simple and reliable in structure, easy to operate and easy to implement, has a high battery swap efficiency, and realizes modularization and miniaturization; and when the manual battery swap system is used for battery swapping, only two parking spaces are occupied, so the system is applicable to various parking lots and most automobile repair stations and can be widely used in various places.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief description of the drawings

Fig. 1 is a schematic diagram of a manual battery swap system for an electric vehicle provided in an embodiment of the invention;
Fig. 2 is a partial schematic diagram of a manual battery swap system for an electric vehicle provided in an embodiment of the invention;
Fig. 3 is a partial bottom view of a manual battery swap system for an electric vehicle provided in an embodiment of the invention;
Fig. 4 is a schematic diagram of a battery pack management device provided in an embodiment of the invention; and
Fig. 5 is a flow chart of a manual battery swap method for an electric vehicle provided in an embodiment of the invention.

Description of main reference numerals:
1 - Vehicle hoister 2 - Auxiliary bolt disassembly device 3 - Battery pack management device
4 - Transfer trolley

### Detailed Description of Embodiments

In order to further illustrate the technical means used to achieve the intended purpose of the invention and the technical effects thereof, the implementation of a manual battery swap system for an electric vehicle proposed in the invention and the effects thereof are described in detail hereinafter in conjunction with the accompanying drawings and the preferred embodiments.

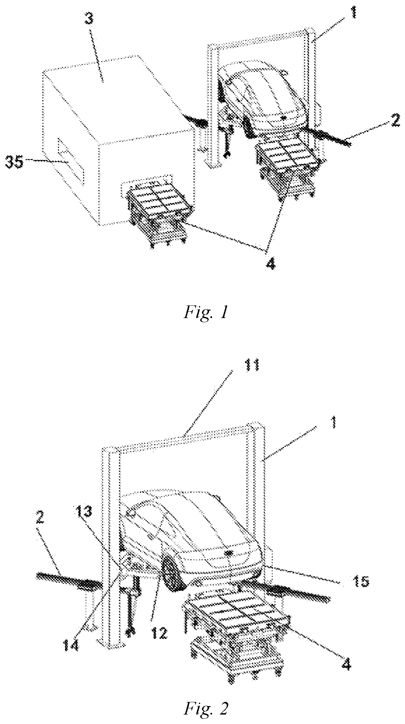

A manual battery swap system for an electric vehicle, as shown in Fig. 1, comprises: a vehicle hoister 1, an auxiliary bolt disassembly device 2, a battery pack management device 3 and a transfer trolley 4, wherein the vehicle hoister 1 is used to hoist a vehicle; the auxiliary bolt disassembly device 2 is used to tighten or loosen a bolt, wherein the auxiliary bolt disassembly device 2 comprises one or more floor type manipulators; the battery pack management device 3 is provided at one side of the vehicle hoister 1 for receiving a used battery pack and supplying a fresh battery pack. The transfer trolley 4 is a walking device for transporting, exchanging and lifting battery packs.

It should be noted that the term "used battery pack" in the invention refers to a battery pack detached from a vehicle during a battery swap, and does not limit the battery pack detached from a vehicle to a completely drained state. In the same way, the term "fresh battery pack" refers to the battery pack installed to the vehicle during a battery swap, and does not limit the battery pack installed to the vehicle to be of a fully charged state.

The term "electric vehicle" in the invention generally refers to a vehicle having a swappable battery pack, and is not limited to a battery electric vehicle, and may also be a hybrid vehicle.

The following sections respectively describe the components of the manual battery swap system in detail:

### (I) Vehicle hoister

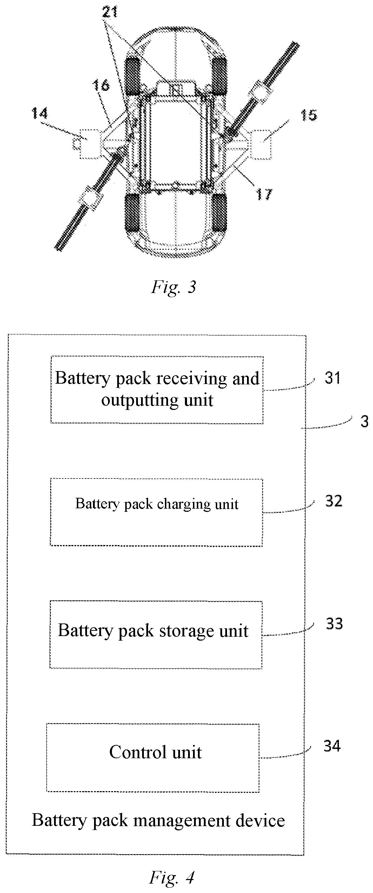

In some embodiments, as shown in Figs. 2 and 3, the vehicle hoister 1 is a double-column hoister, comprising a main body frame structure 11, a support structure 12 and hoisting structure 13, wherein the hoisting structure 13 is provided on the main body frame 11 and is connected to the support structure 12, and the hoisting structure 13 is used to hoist a vehicle to a preset height by means of hoisting the support structure 12, the preset height being the height of the vehicle, when in place for battery swapping in the manual battery swap system, from the ground, and the height needing to be lifted is set according to the model of vehicle, user's preferences, etc. The hoisting structure 13 comprises a first lifting arm 14 and a second lifting arm 15; and the hoisting structure 13 may be a lead screw rod, a hydraulic cylinder, etc.

As shown in Fig. 2, the support structure 12 is used to support vehicle lift points, and comprises a first support structure 16 and a second support structure 17. The first support structure 16 is provided on the first lifting arm 14, and the second support structure 17 is provided on the second lifting arm 15.

With the double-column hoister, not only smooth lifting of the vehicle is ensured, but also the occupied space of the battery swap system is further reduced. In addition, the double-column hoister is only a preferred embodiment of the invention, and other existing double-column hoisters or other hoisters capable of implementing the invention may also be applied thereto.

### (II) Auxiliary bolt disassembly device

In some embodiments, the auxiliary bolt disassembly device 2 includes two floor type manipulators 21, which are respectively provided on bottom faces corresponding to two ends of one diagonal of the vehicle for tightening or loosening the bolts, so as to remove the used battery pack or install a fresh battery pack. The auxiliary bolt disassembly device 2 may comprise one or more floor type manipulators 21, which are not limited to two floor type manipulators 21 shown in the examples, and is also not limited to the configuration position, as long as the auxiliary bolt disassembly device 2 can be configured such that the battery pack can be disassembled.

### (III) Battery pack management device

As shown in Fig. 4, the battery pack management device 3 comprises: a battery pack receiving and outputting unit 31, a battery pack charging unit 32, a battery pack storage unit 33 and a control unit 34, wherein the battery pack receiving and outputting unit 31 is used to receive a used battery pack conveyed by a transfer trolley 4 and output a fresh battery pack to the transfer trolley 4; the battery pack charging unit 32 is used to charge the used battery pack; the battery pack storage unit 33 is used to store the fresh battery pack and the used battery pack and can simultaneously manage multiple battery packs, and thus can complete battery swaps for multiple vehicles continuously without interruption, contributing to high battery swap efficiency; and the control unit 34 is used to control the battery pack receiving and outputting unit 31 to receive or output the battery pack, to control the battery pack charging unit 32 to charge the battery pack, and to control the battery pack storage unit 33 to store the battery pack.

As shown in Fig. 1, the battery pack management device 3 further comprises a battery exchange port 35. Though the battery exchange port 35, the battery pack management device receives the used battery pack conveyed by the transfer trolley 4 and outputs the fresh battery pack to the transfer trolley 4.

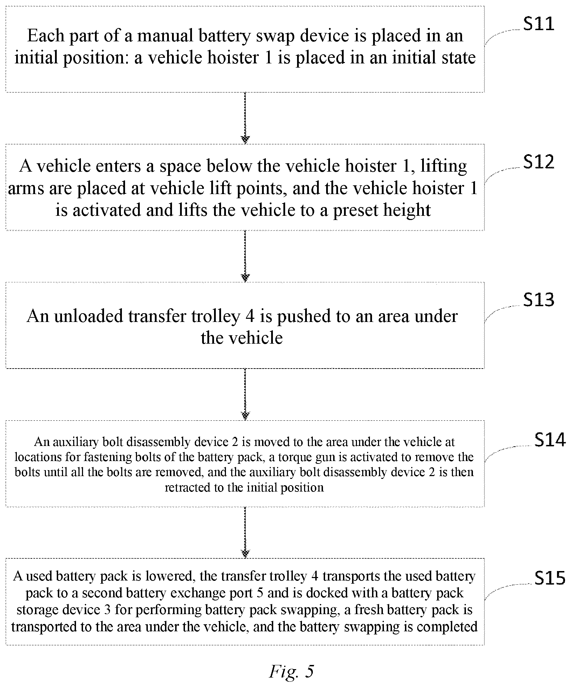

Based on the manual battery swap system mentioned above, as shown in Fig. 5, when a manual battery swap is performed, the operation method comprises the following steps.

In step S11, each part of the manual battery swap device is placed in an initial position: the vehicle hoister 1 is placed in an initial state, that is to say, the first lifting arm 14 and the second lifting arm 15 are placed on two sides of the vehicle area and lowered to the lowest position; and the auxiliary bolt disassembly device 2 is placed on both sides of the vehicle area, which vehicle area is defined as follows: the vehicle enters a preset stop position of the vehicle hoister 1, at the time when the vehicle is parked and waiting for the lifting arms to lift the vehicle, the projection area of the vehicle onto the bottom surface in a direction perpendicular to the direction of the vehicle plane is the vehicle area.

In step S12, the vehicle enters the space below the vehicle hoister 1, the lifting arms are placed at the vehicle lift points, and the vehicle hoister 1 is activated and lifts the vehicle to a preset height.

In step S 13, the unloaded transfer trolley 4 is pushed to an area under the vehicle.

In step S14, the auxiliary bolt disassembly device 2 is moved to the area under the vehicle at the locations for fastening bolts of the battery pack, the torque gun is activated to remove the bolts until all the bolts are removed, and the auxiliary bolt disassembly device 2 is then retracted to the initial position.

In step S 15, the used battery pack is lowered, and the transfer trolley 4 transports the used battery pack to the second battery exchange port 5, and is docked with the battery pack storage device 3 for performing battery pack swapping. To transport a fresh battery pack to the area under the vehicle, the transfer trolley 4 carrying the fresh battery pack is pushed to the area under the vehicle; and
then the auxiliary bolt disassembly device 2 is moved to the area under the vehicle at the locations for fastening bolts of the battery pack, the torque gun is activated to tighten the bolts until all the bolts are tightened, and the manual battery swapping is completed after retracting the auxiliary bolt disassembly device 2 to the initial position.

The various parts of the manual battery swap system of the invention are independently arranged and can be used separately, the components are small in size, light in weight, easy to install and easy to transport, so the whole system is simple and reliable in structure, easy to operate and easy to implement, and realizes modularization and miniaturization; and the manual battery swap system is applicable to various parking lots and most automobile repair stations and can be widely used in various places. Using the manual battery swap system of the invention, during the battery swap, a battery swap worker operates the transfer trolley 4, the vehicle hoister 1 and the bolt disassembly device 2 with a high battery swap accuracy; and with the manual battery swap system of the invention, the battery swap can be completed in a few minutes, achieving a high battery swap efficiency.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A manual battery swap system for an electric vehicle, **characterized by** comprising: a vehicle hoister, an auxiliary bolt disassembly device, a transfer trolley, and a battery pack storage platform, wherein
the vehicle hoister is used to hoist a vehicle;
the auxiliary bolt disassembly device is used to tighten or loosen a bolt;
the battery pack management device is provided on one side of the vehicle hoister for receiving a used battery pack and supplying a fresh battery pack; and
the transfer trolley is used to transport, exchange and lift a battery pack.

2. The manual battery swap system for an electric vehicle according to claim 1, **characterized in that**
the vehicle hoister comprises a main body frame structure, a support structure, and a hoisting structure;
wherein the hoisting structure is provided on a main body frame and is connected to the support structure;
the support structure is used to support vehicle lift points; and
the hoisting structure is used to lift a vehicle to a first preset height by means of hoisting the support structure, the first preset height being the height of the vehicle, when in place for battery swapping, from the ground.

3. The manual battery swap system for an electric vehicle according to claim 2, **characterized in that**
the hoisting structure comprises a first lifting arm and a second lifting arm, the support structure comprise a first support structure and a second support structure, the first support structure is provided on the first lifting arm, and the second support structure is provided on the second lifting arm.

4. The manual battery swap system for an electric vehicle according to claim 1, **characterized in that**
the auxiliary bolt disassembly device comprises one or more floor type manipulators, and the floor type manipulator comprises a torque gun for tightening or loosening a bolt.

5. The manual battery swap system for an electric vehicle according to claim 4, **characterized in that**
the auxiliary bolt disassembly device comprises two floor type manipulators, which are respectively provided on bottom faces corresponding to two ends of one diagonal of the vehicle.

6. The manual battery swap system for an electric vehicle according to claim 1, **characterized in that**
the battery pack management device comprises:
a battery pack receiving and outputting unit for receiving a used battery pack conveyed by the transfer trolley and outputting a fresh battery pack to the transfer trolley;
a battery pack charging unit for charging a used battery pack; and
a battery pack storage unit for storing a fresh battery pack and a used battery pack.

7. The manual battery swap system for an electric vehicle according to claim 6, **characterized in that**
the battery pack management device further comprises: a control unit for controlling the battery pack receiving and outputting unit to receive or output a battery pack, controlling the battery pack charging unit to charge a battery pack, and controlling the battery pack storage unit to store a battery pack.

8. The manual battery swap system for an electric vehicle according to claim 6, **characterized in that**
the battery pack management device further comprises a battery exchange port, through which the used battery pack is received and the fresh battery pack is output.
